# EUROPÄISCHE PATENTANMELDUNG

(11) **EP 1 179 824 A2**
(43) Veröffentlichungstag der Anmeldung: **13.02.2002**
(21) Anmeldenummer: 01440212.7
(22) Anmeldetag: 06.07.2001
(51) Int. Cl.: H01B 11/22, G02B 6/44

(54) **Temperatur beständiges Nachrichtenkabel**

(30) Priorität: 11.08.2000 DE 10039274
(71) Anmelder: ALCATEL, 75008 Paris (FR)
(72) Erfinder: Gregor, Paul, 46145 Oberhausen (DE); Nothofer, Klaus, 40699 Erkrath (DE)
(74) Vertreter: Menzietti, Domenico, Dipl.-Ing

(57) **Zusammenfassung**

Bei der Verlegung von Nachrichtenkabeln im Innern von Röhren, in der heiße Güter befördert werden, wie z.B. bei Fernwärmeröhren, ist es wesentlich solche Nachrichtenkabel dauerhaft vor der umgebenden aggressiven Wärme zu schützen. Deshalb ist hierfür die beste Lösung, wenn das Nachrichtenkabel nicht direkt in Kontakt mit dieser aggressiven warmen Umgebung liegt. Dies ist dadurch erreicht, dass um die Kabelseele dieses Nachrichtenkabels sich mindestens ein kontinuierlicher Hohlraum befindet, der von einem Mantel abgedichtet ist. Um die Wärme, die aus der heißen Umgebung in diesen Hohlraum mit der Zeit unweigerlich diffundieren wird, abführen zu können, wird vorteilhafterweise ein Medium durch diesen Hohlraum befördert. Nur somit gelingt es, die Temperatur um die Kabelseele auf Dauer konstant zu halten und entsprechend ein langlebiges in z.B. Fernwärmeröhre verlegtes Nachrichtenkabel zu erzielen.

## Beschreibung

Die Erfindung bezieht sich auf ein Nachrichtenkabel nach dem Oberbegriff des Anspruchs 1 sowie ein Verfahren zur Abkühlung eines Nachrichtenkabels nach dem Oberbegriff des Anspruchs 7.

Bei Nachrichtenkabeln wird zunehmend nach Alternativen gesucht, um die Kosten der Verlegung zu minimieren. Hierbei ist man dazu gekommen, schon vorhandene Trassen von Rohrleitungen wie z.B. Abwasserkanäle auszunutzen, um Nachrichtenkabel darin zu verlegen. Dabei treten einige Probleme auf, wie z.B. das Einführen des Nachrichtenkabels in solche Kanäle. Die Probleme sind nicht immer einfach zu lösen. Dies verursacht wiederum Kosten, die die Wirtschaftlichkeit solcher alternativer Projekte in Frage stellt.

Anders als bei Abwasserkanälen sind oft wärmeisolierte Leitungsröhren von z.B. einem Fernwärmenetz oberirdisch verlegt. Zudem folgen solche Fernwärmenetze, im Vergleich zu den Netzen der Abwasserkanäle, manchmal auch anderen Routen, die auch für Nachrichtenkabel von Interesse sind. Deshalb wurde die Verlegung von Nachrichtenkabeln in wärmeisolierten Leitungsröhren getestet und entwickelt. Dabei stößt man auf andere Probleme, besonders auf die hohe Temperatur der Umgebung, in der das Nachrichtenkabel liegt.

Hitzebeständige Nachrichtenkabel sind längst Stand der Technik. Dabei wurde hauptsächlich darauf acht gegeben, dass solche Nachrichtenkabel in Brandfällen möglichst lange funktionstüchtig bleiben. Solche Nachrichtenkabel, wie z.B. in der DE 299 13 737 offenbart, können nur für eine gewisse Zeit sehr hohe Temperaturen aushalten.

Deshalb können solche hitzebeständige Nachrichtenkabel nicht in Fernwärmeröhren verlegt werden, da in diesem Fall die Nachrichtenkabel dauerhaft mit einer Hitzequelle konfrontiert sind. In der DE 298 00 181 ist ein Nachrichtenkabel offenbart, das an Fernwärmeröhren anzubringen ist. In dieser Druckschrift wird aber das Nachrichtenkabel nicht im Fernwärmerohr verlegt, sondern außerhalb in der Wärmedämmschicht, die das Fernwärmerohr umgibt. Dies hat den Vorteil, dass das Nachrichtenkabel nicht direkt in Kontakt mit der Hitzequelle kommt. Doch ist es nicht immer möglich, auf einfachste Art und Weise Nachrichtenkabel in Wärmedämmschichten von Fernwärmerohren einzuführen. Oft ist nicht einmal genügend Platz vorhanden, da diese Wärmedämmschicht eigentlich vollständig gefüllt sein sollte, z.B. mit einem isolierenden glasfasrigen Material, um Dissipation von Hitze zu vermeiden.

Der Erfindung liegt die Aufgabe zugrunde, ein Nachrichtenkabel weiter zu entwickeln, das auf Dauer hitzebeständig bleibt, um typischerweise im Innern von Fernwärmeröhren zu bestehen.

Die Aufgabe wird erfindungsgemäß durch ein Nachrichtenkabel nach der Lehre des Anspruchs 1 sowie durch ein Verfahren zur Abkühlung eines Nachrichtenkabels nach der Lehre des Anspruchs 7 gelöst.

Bei der Verlegung von Nachrichtenkabeln im Innern von Röhren, in der heiße Güter befördert werden, wie z.B. bei Fernwärmeröhren, ist es wesentlich solche Nachrichtenkabel dauerhaft vor der umgebenden aggressiven Wärme zu schützen. Deshalb ist hierfür die beste Lösung, wenn das Nachrichtenkabel nicht direkt in Kontakt mit dieser aggressiven warmen Umgebung liegt. Dies ist dadurch erreicht, dass um die Kabelseele dieses Nachrichtenkabels sich mindestens ein kontinuierlicher Hohlraum befindet, der von einem Mantel abgedichtet ist. Um die Wärme, die aus der heißen Umgebung in diesen Hohlraum mit der Zeit unweigerlich diffundieren wird, abführen zu können, wird vorteilhafterweise ein Medium durch diesen Hohlraum befördert. Nur somit gelingt es, die Temperatur um die Kabelseele auf Dauer konstant zu halten. Entsprechend der Temperatur der beförderten heißen Güter in den Rohrleitungen in denen das Nachrichtenkabel verlegt wird, kann zwischen bestimmten Media mit unterschiedlicher Wärmeleitfähigkeit gewählt werden. Am einfachsten ist sicherlich, die Verwendung von einem Gas wie Luft oder einer Flüssigkeit wie Wasser.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der beiliegenden Zeichnungen weiter erläutert.

Es zeigen:

Figur 1, einen Querschnitt eines erfindungsgemäßen Nachrichtenkabels,

Figur 2, einen Querschnitt einer anderen Alternative eines erfindungsgemäßen Nachrichtenkabels.

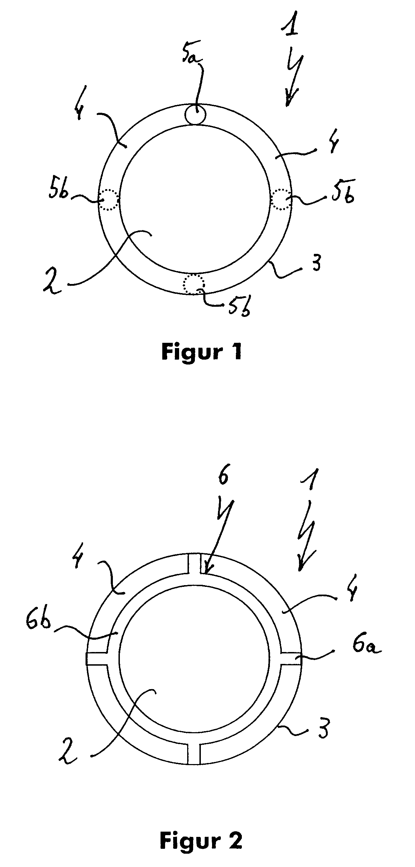

In den beiden Figuren 1 und 2 ist ein Querschnitt eines Nachrichtenkabels 1 gezeichnet. Im Zentrum befindet sich die Kabelseele 2 dieses Nachrichtenkabels 1, die hier nicht detailliert ist. Eine Vielzahl von Möglichkeiten für die Kabelseele 2 wäre denkbar in Abhängigkeit der Verwertung dieses Nachrichtenkabels, wie z.B. nur Lichtwellenleiter falls es sich um ein rein optisches Nachrichtenkabel 1 handelt. Aber eine Mischung von Lichtwellenleiter und Kupferleiter wäre auch denkbar, sowie ein Nachrichtenkabel nur aus Kupferleitern. Diese Erfindung ist für Nachrichtenkabel, die mindestens einige Lichtwellenleiter enthalten, besonders geeignet, da diese nicht so hitzebeständig wie Kupferleiter sind.

Um die Kabelseele 2 entlang der Längsachse ist mindestens ein Hohlraum 4 gebildet. Dies ist durch Abstandshalter erreicht, die entlang der Kabelseele und an deren Außenfläche verteilt sind, und die einen darauf umwickelten Mantel 3 tragen sollen. Dieser Mantel 3 dient dazu, den Hohlraum 4 abzudichten.

In diesem Hohlraum 4 wird dann ein Medium befördert, das die Kabelseele vor der eindringenden Wärme schützen soll. Im Ausführungsbeispiel auf Figur 1 besteht dieser Abstandshalter aus einem einzigen Kunststoffröhrchen 5a. Das Kunststoffröhrchen 5a ist dementsprechend spiralförmig auf die Kabelseele 2 gewickelt, um den Mantel 3 gleichmäßig halten zu können.

Es ist durchaus möglich mehrere solche Kunststoffröhrchen 5a, 5b zu verwenden, wie es auf Figur 1 mit den drei zusätzlichen Kunststoffröhrchen 5b angedeutet wird. In diesem Fall ist es vorteilhaft die Kunststoffröhrchen auf den Umfang der Kabelseele gleichmäßig zu verteilen. Es ist in diesem Fall dann nicht mehr nötig, die Kunststoffröhrchen 5a, 5b spiralförmig auf die Kabelseele 2 zu wickeln, sondern sie können durchaus entlang der Kabelseele ohne Windung positioniert werden. Hierfür könnten auch nur drei Kunststoffröhrchen, jeweils um 120° versetzt, hinreichend sein.

In dem Ausführungsbeispiel im Figur 2 bestehen die Abstandshalter aus Stegen 6, 6a, 6b, die bei der Herstellung der Kabelseele im üblichen Verfahren, um diese Kabelseele extrudiert werden. Dabei wird direkt um die Kabelseele 2 eine Schale 6b gebildet, in der die Stege 6a mitextrudiert werden. Diese Stege 6a können zwar auch entlang der Längsachse der Kabelseele 2 spiralförmig geformt werden, doch meistens werden sie ohne Windung gebildet. Der Mantel 3, der somit in diesem Ausführungsbeispiel im Figur 2 vier Hohlräume durch die vier Stege 6a begrenzt abdichtet, wird dann auf diese Stege geformt.

Der Mantel 3 kann aus Bändern gebildet werden, die auf die Abstandshalter bewickelten werden. Vorteilhafterweise kann der Mantel 3 auch aus einem geschweißten bzw. gepressten metallischen Material hergestellt sein. Hierfür kann unter anderem ein Material wie Stahl, Kupfer oder Aluminium verwendet werden. Notfalls kann dieses metallische Rohr gewellt geformt werden. Dieser Mantel 3, der den einen oder die mehreren Hohlräume 4 abdichtet, kann besonders sorgfältig gefertigt werden, um eine vollkommene hermetische Abdichtung zu bilden.

In einem oder mehreren kontinuierlichen Hohlräumen 4 wird dann ein Medium befördert, das die im Nachrichtenkabel eingedrungene Wärme abführen wird. Hierfür kann als Medium ein Gas wie z.B. Luft oder Stickstoff verwendet werden. Es ist durchaus möglich eine Flüssigkeit wie Wasser oder ein FCKW-Ersatzkältemittel als Medium zu verwenden. Die Wahl des Mediums mit unterschiedlicher Wärmeleitfähigkeit wird davon abhängen, wie heiß die Güter sind, die in der Rohrleitung befördert werden in der das Nachrichtenkabel 1 verlegt wurde.

Die vorgestellte Erfindung beschränkt sich nicht nur auf Nachrichtenkabel, die in Fernwärmeröhren zu verlegen sind, sondern allgemein auf Nachrichtenkabel, die in schon vorhandenen Trassen von Röhren verlegt werden, in denen heiße Güter befördert werden. Dadurch nutzt man vorteilhafterweise ein schon vorhandenes Netz von Röhren aus, um ein neues Telekommunikationsnetz mit Hilfe von solchen Nachrichtenkabeln günstig aufzubauen.

## Patentansprüche

1. Nachrichtenkabel (1) mit einer Kabelseele (2) und einem diese Kabelseele (2) umringenden Mantel (3), zur Verlegung in schon vorhandenen Rohrleitungen,
**dadurch gekennzeichnet, dass**
das Nachrichtenkabel (1) mindestens einen kontinuierlichen Hohlraum (4) entlang der Kabelseele (2) aufweist, wobei dieser Hohlraum (4) von dem umringenden Mantel (3) abgedichtet ist.

2. Nachrichtenkabel (1) nach Anspruch 1, **dadurch gekennzeichnet, dass** der Hohlraum (4) durch mindestens ein Kunststoffröhrchen (5a, 5b), das spiralförmig auf die Kabelseele (2) bewickelt ist, gebildet ist, wobei auf das Kunststoffröhrchen (5a, 5b) der Mantel (3) aufgesetzt ist.

3. Nachrichtenkabel (1) nach Anspruch 1, **dadurch gekennzeichnet, dass** der Hohlraum (4) durch mindestens drei Kunststoffröhrchen (5a, 5b), die längs auf die Kabelseele (2) positioniert sind, gebildet ist, wobei auf die Kunststoffröhrchen (5a, 5b) der Mantel (3) aufgesetzt ist.

4. Nachrichtenkabel nach Anspruch 1, **dadurch gekennzeichnet, dass** der Hohlraum (4) durch mindestens einen Steg (6, 6a, 6b), der auf die Kabelseele (3) extrudiert ist, gebildet ist, wobei auf den Steg (6, 6a, 6b) der Mantel (3) aufgesetzt ist.

5. Nachrichtenkabel (1) nach Anspruch 1, **dadurch gekennzeichnet, dass** der Mantel (3) aus einem geschweißten oder gepressten metallischen Rohr besteht.

6. Nachrichtenkabel (1) nach Anspruch 1, **dadurch gekennzeichnet, dass** der Mantel (3) aus einem gewellten Rohr besteht.

7. Verfahren zur Abkühlung eines Nachrichtenkabels (1), das in eine schon vorhandene Rohrleitung verlegt ist, die zur Beförderung von heißen Gütern verwendet wird,
**dadurch gekennzeichnet, dass**
das Nachrichtenkabel (1) mindestens einen kontinuierlichen Hohlraum (4) entlang seiner Kabelseele (2) aufweist, der von einem umringenden Mantel (3) abgedichtet ist, und zur Abkühlung des Nachrichtenkabels (1) ein Medium durch diesen Hohlraum (4) befördert wird, das ins Nachrichtenkabel (1) eingedrungene Wärme abführt.

8. Verfahren nach Anspruch 7, **dadurch gekennzeichnet, dass** als Medium zur Abführung der Wärme ein Gas wie z.B. Luft oder Stickstoff verwendet wird.

9. Verfahren nach Anspruch 7, **dadurch gekennzeichnet, dass** als Medium zur Abführung der Wärme eine Flüssigkeit wie z.B. Wasser oder einen FCKW-Ersatzkältemittel verwendet wird.
